# EUROPÄISCHE PATENTSCHRIFT

(11) **EP 3 966 085 B1**
(45) Veröffentlichungstag und Bekanntmachung des Hinweises auf die Patenterteilung: **02.04.2025**
(21) Anmeldenummer: 20723305.7
(22) Anmeldetag: 23.04.2020
(51) Int. Cl.: B62D 15/02, G08G 1/14, B60Q 9/00, B62D 1/00, G06V 20/20, G06V 20/64, H04W 4/40

(54) **VERFAHREN ZUM DURCHFÜHREN EINES RANGIERVORGANGS EINES KRAFTFAHRZEUGS MIT KAMERABASIERTER BESTIMMUNG EINES ABSTANDS ZUM KRAFTFAHRZEUG, SOWIE RANGIERASSISTENZSYSTEM**
METHOD FOR MANEUVERING A MOTOR VEHICLE USING A CAMERA-BASED DETERMINATION OF A DISTANCE TO THE MOTOR VEHICLE, AND MANEUVERING ASSISTANCE SYSTEM
PROCÉDÉ POUR EFFECTUER UNE MAN?UVRE D'UN VÉHICULE AUTOMOBILE, SUR LA BASE D'UNE DÉTERMINATION, À L'AIDE D'UNE CAMÉRA, D'UNE DISTANCE JUSQU'AU VÉHICULE AUTOMOBILE, ET SYSTÈME D'ASSISTANCE AUX MAN?UVRES

(30) Priorität: 06.05.2019 DE 102019206447
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: ZIEBART, Sascha, 38547 Calberlah (Wettmershagen) (DE); OBST, Simone, 38100 Braunschweig (DE)
(86) Internationale Anmeldenummer: PCT/EP2020/061405
(87) Internationale Veröffentlichungsnummer: WO 2020/224986

(56) Entgegenhaltungen:
- EP-A1- 3 379 514
- WO-A1-2019/069429
- DE-A1- 102012 014 207
- US-A1- 2018 273 029
- US-A1- 2018 345 851

## Beschreibung

Ein Aspekt der Erfindung betrifft ein Verfahren zum Durchführen eines Rangiervorgangs eines Kraftfahrzeugs. Bei dem Verfahren wird das Rangieren des Kraftfahrzeugs durch einen Nutzer mittels eines tragbaren Kommunikationsendgeräts durchgeführt. Der Nutzer befindet sich während dieses Rangiervorgangs außerhalb des Kraftfahrzeugs im Umgebungsbereich des Kraftfahrzeugs. Zu diesem Durchführen des Rangiervorgangs mittels des tragbaren Kommunikationsendgeräts werden Signale zwischen dem tragbaren Kommunikationsendgerät und dem Kraftfahrzeug ausgetauscht. Ein Abstand zwischen dem Kraftfahrzeug und dem tragbaren Kommunikationsendgerät wird bestimmt. Ein weiterer Aspekt der Erfindung betrifft ein Rangierassistenzsystem für ein Kraftfahrzeug.

Aus der DE 10 2016 115 083 A1 ist ein Verfahren zum ferngesteuerten Manövrieren eines Kraftfahrzeugs bekannt. Mit einem mobilen Endgerät wird der Vorgang von außerhalb des Kraftfahrzeugs gesteuert. Mit einer Kamera des mobilen Endgeräts wird das Kraftfahrzeug erfasst, wobei der Fernsteuerungsvorgang unterbrochen wird, wenn das Kraftfahrzeug nicht mehr erfasst wird. Durch eine derartige Vorgehensweise wird der Vorgang auch dann unterbrochen, wenn der Nutzer des mobilen Endgeräts nahe am Fahrzeug ist und nur das mobile Endgerät so hält, dass es das Fahrzeug nicht erfassen kann. Dadurch können sich unerwünschte Verzögerungen ergeben, obwohl der Nutzer das Fahrzeug eigentlich beobachtet und überwacht.

Rangiervorgänge für ein Kraftfahrzeug, bei welchen ein Nutzer außerhalb des Kraftfahrzeugs positioniert ist und den Rangiervorgang mittels eines tragbaren Kommunikationsendgeräts, wie insbesondere einem Mobilfunkgerät, das beispielsweise ein Smartphone sein kann, steuert, sind bekannt. So ist in dem Zusammenhang auf die EP 2 617 627 A2 zu verweisen. Üblich ist es dort auch, dass Bildsignale, die von dem Fahrzeug erfasst werden, an diese Fernsteuerungseinrichtung, die das tragbare Kommunikationsgerät darstellt, übertragen werden. Dadurch kann ein Bild auf einer Anzeigeeinheit dieser Fernsteuerungseinrichtung angezeigt werden. Möglich ist es auch, dass eine maximale Entfernung zwischen dieser Fernbedienung und dem Fahrzeug festgelegt wird und überprüft wird. Bei einem Überschreiten dieser maximalen Entfernung wird das Fahrzeug automatisch gestoppt.

Darüber hinaus ist aus der WO 2013/037694 A1 ein Rangiersystem und ein Verfahren zum automatischen Rangieren eines Kraftfahrzeugs bekannt. Auch dort wir ein entsprechender Rangiervorgang des Kraftfahrzeugs durch einen Nutzer, der sich außerhalb des Kraftfahrzeugs während dieses Rangiervorgangs befindet, gesteuert. Auch dazu weist der Nutzer ein tragbares Kommunikationsendgerät, wie beispielsweise ein Mobiltelefon, auf. Darüber hinaus ist auch vorgesehen, dass das tragbare Kommunikationsendgerät eine Kamera aufweisen kann, welche dazu ausgebildet ist, aus einem durch diese Kamera aufgenommenen Bild ein Gesicht zu extrahieren und mit einem im tragbaren Kommunikationsendgerät abgelegten Referenzgesicht zu vergleichen. Dadurch kann die Bedienung des Rangiersystems nur für registrierte Benutzer freigegeben werden.

Die US 2018/345 851 A1 offenbart Systeme, Verfahren und computerlesbare Medien, um einen Abstand zwischen einem Fahrzeug und einem Computergerät während eines Fernparkvorgangs zu bestimmen. Ein Beispielverfahren umfasst das Empfangen eines 3D-Modells eines Fahrzeugs und von Trägheitsdaten des Fahrzeugs durch ein Computergerät. Das Verfahren umfasst auch das Erfassen eines Bildes des Fahrzeugs. Das Verfahren umfasst ferner das Bestimmen eines Abstands zwischen der Rechenvorrichtung und dem Fahrzeug auf der Grundlage des Bildes und des 3D-Modells und das Aktualisieren des Abstands auf der Grundlage der Fahrzeugträgheitsdaten. Die US 2018/345 851 A1 zeigt die Merkmale des Oberbegriffs des Anspruchs 1.

Die DE 10 2012 014 207 A1 betrifft eine Fahrerassistenzeinrichtung zum Durchführen eines vollautonomen Rangiervorgangs, insbesondere eines Parkvorgangs, eines Kraftfahrzeugs, mit einer Sensoreinrichtung zum Erfassen von Umgebungsinformationen, mit einer elektronischen Steuereinrichtung, welche dazu ausgelegt ist, in Abhängigkeit von den Umgebungsinformationen eine Trajektorie für den Rangiervorgang im Voraus zu bestimmen und abhängig von der Trajektorie Steuersignale zu erzeugen, um das Kraftfahrzeug entlang der Trajektorie in Längsrichtung und in Querrichtung selbsttätig zu führen, wobei die Trajektorie durch zumindest einen Rangierzug gebildet ist und der zumindest eine Rangierzug mit Anhalten des Kraftfahrzeugs endet, und mit einer Benutzerschnittstelle zum Ausgeben von Benutzerinformationen für einen Fahrer des Kraftfahrzeugs, wobei die Steuereinrichtung dazu ausgelegt ist, über die Benutzerschnittstelle eine Benutzerinformation über das Ende des jeweils aktuellen, im Voraus bestimmten Rangierzuges auszugeben.

Gemäß der WO 2019 069 429 A1 ist ein Parksteuerungsverfahren bereitgestellt, um auf der Grundlage einer von einem Bediener außerhalb eines Fahrzeugs erhaltenen Betriebsanweisung eine Steuervorrichtung für ein Fahrzeug zu veranlassen, einen ersten Steuerbefehl zum Bewegen des Fahrzeugs entlang eines ersten Weges auszuführen, der zu einem Zielparkplatz führt. Das Parkkontrollverfahren umfasst das Berechnen eines zweiten Weges, um das Fahrzeug um einen vorbestimmten Abstand oder weiter von einem in der Nähe des Fahrzeugs erfassten Objekt zu trennen, und das Veranlassen der Steuervorrichtung, einen zweiten Steuerbefehl zum Bewegen des Fahrzeugs entlang des zweiten Weges auszuführen, wenn die Ausführung des ersten Steuerbefehls ausgesetzt oder abgebrochen wurde.

Bei den bekannten Ausführungen ist nicht bekannt, wie ein derartiger Abstand zwischen dem Kraftfahrzeug und dem tragbaren Kommunikationsendgerät bestimmt wird. Insbesondere können dadurch Ungenauigkeiten auftreten, die gerade in dem Moment, bei welchem das Kommunikationsendgerät einen Abstand größer einem Referenzabstand erreicht, ab dem die Steuerung des Rangiervorgangs mit dem tragbaren Kommunikationsendgerät nicht mehr möglich sein soll, nachteilig sind. Dadurch können auch gegebenenfalls sicherheitskritische Zustände bei diesem automatischen Rangieren mittels des tragbaren Kommunikationsendgeräts auftreten.

Es ist Aufgabe der vorliegenden Erfindung, ein Verfahren und ein Rangierassistenzsystem zu schaffen, bei welchem bei einem Durchführen eines Rangiervorgangs eines Kraftfahrzeugs, bei welchem ein Nutzer extern zum Kraftfahrzeug angeordnet ist und mittels eines tragbaren Kommunikationsendgeräts den Rangiervorgang durchführt, eine verbesserte Bestimmung eines Abstands zwischen dem Kraftfahrzeug und dem Kommunikationsendgerät ermöglicht ist.

Diese Aufgabe wird durch ein Verfahren und ein Rangierassistenzsystem gemäß den unabhängigen Ansprüchen gelöst.

Ein Aspekt der Erfindung betrifft ein Verfahren zum Durchführen eines automatischen Rangiervorgangs eines Kraftfahrzeugs. Bei dem Verfahren wird das Rangieren des Kraftfahrzeugs durch einen Nutzer mittels eines tragbaren Kommunikationsendgeräts durchgeführt. Der Nutzer ist bei diesem Rangiervorgang außerhalb des Kraftfahrzeugs im Umgebungsbereich des Kraftfahrzeugs positioniert. Bei diesem automatischen Rangieren des Kraftfahrzeugs mittels des tragbaren Kommunikationsendgeräts werden Signale zwischen dem Kommunikationsendgerät und dem Kraftfahrzeug ausgetauscht. Ein Abstand zwischen dem Kraftfahrzeug und dem tragbaren Kommunikationsendgerät wird bestimmt. Während des Rangiervorgangs wird das Kraftfahrzeug zumindest bereichsweise mit einer Kamera des tragbaren Kommunikationsendgeräts aufgenommen. Abhängig von den aufgenommenen Bildinformationen wird ein Abstand zwischen dem Kraftfahrzeug und dem tragbaren Kommunikationsendgerät bestimmt. Durch eine derartige Vorgehensweise kann eine einfache und dennoch exakte Abstandsbestimmung erfolgen. Indem nämlich durch eine Kamera, die in einer für den Abstand relevanten Komponenten genutzt wird, um Bildinformationen für die Abstandsbestimmung zu generieren, kann die Abstandsbestimmung auch sehr präzise erfolgen. Insbesondere ist dies durch die Kamera des tragbaren Kommunikationsendgeräts ermöglicht. Die Perspektive dieser Kamera ermöglicht auch eine umfängliche Erfassung des Kraftfahrzeugs. Dadurch kann abhängig von diesen erfassten Bildinformationen wiederum eine umfänglichere und präzisere Auswertung erfolgen, die wiederum eine genauere Abstandsbestimmung ermöglicht.
ferner ist vorgesehen, dass auf einer Anzeigeeinheit des Kommunikationsendgeräts der bestimmte Abstand und/oder eine Rangiertrajektorie des Kraftfahrzeugs und/oder Bedienanweisungen als erweiterte Realität (Augmented Reality) in einem Bild angezeigt wird. ferner kann zusätzlich auch ein Identifizierungsstatus des Kraftfahrzeugs als erweiterte Realität angezeigt werden. Dadurch wird eine sehr realitätsnahe Darstellung dieser genannten Informationen für einen Nutzer ermöglicht. Eine sehr schnelle und intuitive Wahrnehmung dieser Informationen ist dadurch ermöglicht.

Ferner ist vorgesehen, dass vor dem Bestimmen des Abstands eine Identifikationsprüfung des Kraftfahrzeugs durchgeführt wird. Insbesondere wird dazu in dem zumindest einen aufgenommenen Bild nach zumindest einem charakteristischen Merkmal des Kraftfahrzeugs gesucht, und das Kraftfahrzeug als dasjenige identifiziert, welches zur Steuerung mit dem Kommunikationsendgerät authentifiziert ist, wenn ein derartiges charakteristisches Merkmal in dem Bild erkannt wird. Damit kann in Situationen, in welchen beispielsweise auch mehrere Kraftfahrzeug im Umgebungsbereich vorhanden sind, auch erreicht werden, dass nur derjenige Abstand bestimmt wird, der tatsächlich zwischen dem tragbaren Kommunikationsendgerät und dem zugehörigen Kraftfahrzeug bestimmt wird. Ein derartiges charakteristisches Merkmal kann beispielsweise das amtliche Kennzeichen dieses Kraftfahrzeugs sein. Es können jedoch auch eine spezifische Farbgebung und/oder anderweitige Merkmale als charakteristische Merkmale vorgesehen sein. Insbesondere ist es auch möglich, dass in dem tragbaren Kommunikationsendgerät das zugehörige Kraftfahrzeug in zumindest einer Perspektive in einem Bild abgespeichert ist, sodass anhand des Vergleichs des zumindest einen abgespeicherten Referenzbilds mit dem aktuell aufgenommenen Bild eine Identifizierungsprüfung durchgeführt werden kann.

Vorzugsweise wird vorgesehen, dass der automatische Rangiervorgang unterbrochen wird, wenn ein Abstand zwischen dem tragbaren Kommunikationsendgerät und dem Kraftfahrzeug bestimmt wird, der größer einem Abstandsschwellwert ist. Durch die oben genannte vorteilhafte Ausführung der Bestimmung des Abstands kann nunmehr auch eine Situation präzise erkannt werden, bei welcher das tragbare Kommunikationsendgerät im Bereich des Abstandsschwellwerts sich befindet und insbesondere diesen überschreitet. Damit kann nunmehr auch verbessert genau dieser Zustand erkannt werden und somit mit höherer Genauigkeit erkannt werden, wann der Rangiervorgang unterbrochen werden muss.

Vorzugsweise ist vorgesehen, dass Abmessungen von Komponenten des Kraftfahrzeugs in dem zumindest einen Bild bestimmt werden und abhängig von diesen Abmessungen der Abstand zwischen dem Kraftfahrzeug und dem tragbaren Kommunikationsendgerät bestimmt wird. Durch diese Informationen über Abmessungen von Komponenten kann eine genauere Bestimmung des Abstands des realen Kraftfahrzeugs zum realen tragbaren Kommunikationsendgerät erfolgen. Derartige Bildinformationen sind besonders tauglich, um Größenverhältnisse in der Realität erkennen zu können und diesbezüglich dann auch auf einen entsprechenden Abstand schließen zu können. Dazu sind bekannte Komponenten des Fahrzeugs besonders geeignet, um als Referenzobjekte zu dienen, deren reale Abmessungen bekannt und abgespeichert sind.

Vorzugsweise ist vorgesehen, dass reale Abmessungen von Komponenten des Kraftfahrzeugs abgespeichert sind und abhängig von einem Vergleich von realen Abmessungen zumindest einer Komponente des Kraftfahrzeugs mit den aus dem Bild bestimmten Abmessungen dieser Komponente der Abstand bestimmt wird. Dies ist eine besonders vorteilhafte und präzise Vorgehensweise, um dann abhängig davon eine genaue Abstandsbestimmung zu erhalten.

Vorzugsweise ist vorgesehen, dass zumindest eine Fokusebene, insbesondere mehrerer Fokusebenen, der Kamera bekannt ist und bei der Bestimmung des Abstands berücksichtigt wird. Insbesondere ist die jeweilige Fokusebene zu einer Bildaufnahme bekannt. Dies da bekannt ist, auf welches Objekt im Bild fokussiert ist. Dies ist eine sehr vorteilhafte Ausführung. Denn durch die bekannte Fokusebene kann insbesondere bezüglich des aufgenommenen Bilds darauf geschlossen werden, wie der Abstand zum Fahrzeug ist. Es kann in den Bildinformationen somit in vorteilhafter Weise derjenige Bereich, in dem insbesondere derartige Komponenten erkannt werden, die mit spezifischer Bildschärfe gezeigt sind, herangezogen werden. Insbesondere kann dies im Vergleich zu anderen Bereichen in dem Bild erfolgen. Da die Fokusebene diejenige Ebene ist, in welcher aufgenommene Informationen scharf dargestellt sind, kann abhängig von diesen Informationen dann auch darauf geschlossen werden, wie der Abstand der Kamera zu dem Kraftfahrzeug ist. Es kann in dem Zusammenhang dann auch der Abstand des tragbaren Kommunikationsendgeräts zum Kraftfahrzeug bestimmt werden. Insbesondere ist dies vorteilhaft, wenn Komponenten des Kraftfahrzeugs auf dem Bild dargestellt sind, insbesondere scharf dargestellt sind. Es kann dann darauf geschlossen werden, dass sich diese scharf dargestellten Komponenten in der Fokusebene der Kamera befinden. Da diese Fokusebene und somit der Abstand der Kamera zu diesem Fokus in dieser Fokusebene bekannt ist, ist somit auch der Abstand der Kamera zu dieser scharf dargestellten Komponente im Bild bekannt.

Insbesondere ist die Kamera dazu ausgebildet, mit einer Auswerteeinrichtung ihre Position zum Kraftfahrzeug zu bestimmen. Insbesondere ist somit die Kamera mittels dieser Auswerteeinrichtung ausgebildet, den Abstand zwischen ihr und dem Kraftfahrzeug zu bestimmen. Insbesondere ist dies dadurch ermöglicht, dass über die Kenntnis der tatsächlichen Abmessungen des Fahrzeugs und seiner markanten Eigenschaften aber auch über die Kombination der bekannten Fokusebene der Linse diese Kamera, gegebenenfalls in Verbindung mit der gemessenen Eigenbewegung des tragbaren Kommunikationsendgeräts und somit auch der Kamera des tragbaren Kommunikationsendgeräts, eine entsprechende Bestimmung erfolgen kann.

In einer vorteilhaften Ausführung ist vorgesehen, dass der Abstand zwischen dem tragbaren Kommunikationsendgerät und dem Kraftfahrzeug, welches mittels dieses tragbaren Kommunikationsendgeräts gesteuert und rangiert werden soll, kontinuierlich bestimmt wird. Damit kann fortlaufend während des Rangiervorgangs der Abstand bereitgestellt werden und gegebenenfalls jederzeit und unverzüglich der Rangiervorgang abgebrochen werden, wenn der Abstandsschwellwert überschritten ist.

Zusätzlich oder anstatt dazu kann vorgesehen sein, dass die Kamera des tragbaren Kommunikationsendgeräts während des Rangiervorgangs kontinuierlich betrieben wird.

Vorzugsweise wird vorgesehen, dass dann, wenn der bestimmte Abstand einen Abstandsschwellwert überschreitet, der Rangiervorgang zumindest unterbrochen wird.

Es kann auch vorgesehen sein, dass mittels des tragbaren Kommunikationsendgeräts ein drahtloses Kommunizieren mit dem Kraftfahrzeug dahingehend erfolgt, dass ein Betätigen einer Klappe, beispielsweise einer Tür oder Heckklappe, erfolgt und somit diesbezüglich ein Öffnen oder Schließen ermöglicht ist.

In einer vorteilhaften Ausführung ist vorgesehen, dass der bestimmte Abstand als Information an das Kraftfahrzeug durch das tragbare Kommunikationsendgerät übertragen wird. Es kann vorgesehen sein, dass diese übertragene Information über den bestimmten Abstand in einer Steuereinheit des Kraftfahrzeugs nochmals überprüft wird, insbesondere plausibilisiert wird.

Insbesondere kann ein Rangierbefehl gestoppt oder zurückgenommen werden, wenn sich das tragbare Kommunikationsendgerät in einem Abstand größer dem Abstandsschwellwert zum Kraftfahrzeug befindet.

Insbesondere ist durch das vorgeschlagene Verfahren eine automatische Abstandsbestimmung mit dem tragbaren Kommunikationsendgerät beziehungsweise mit Bildinformationen, die damit erzeugt werden, ermöglicht und eine Abstandsbestimmung unabhängig von einem zum tragbaren Kommunikationsendgerät separaten Fahrzeugschlüssel des Kraftfahrzeugs ermöglicht. Abstandsbestimmungen, die zwischen einem derartigen Fahrzeugschlüssel des Kraftfahrzeugs und dem Kraftfahrzeug durchgeführt werden, sind nicht erforderlich.

Ein weiterer Aspekt der Erfindung betrifft ein elektronisches Rangierassistenzsystem für ein Kraftfahrzeug. Dieses Rangierassistenzsystem weist ein Kraftfahrzeug und ein dazu separates, tragbares Kommunikationsendgerät auf. Das Kommunikationsendgerät ist zum drahtlosen Kommunizieren mit dem Kraftfahrzeug ausgebildet, sodass ein Rangiervorgang des Kraftfahrzeugs durch einen Nutzer von außerhalb des Kraftfahrzeugs mit dem tragbaren Kommunikationsendgerät steuerbar ist. Das Rangiersystem ist zum Durchführen eines Verfahrens gemäß dem oben genannten Aspekt oder einer vorteilhaften Ausgestaltung davon ausgebildet. Insbesondere wird dieses Verfahren mit dem Rangierassistenzsystem durchgeführt.

Ein weiterer Aspekt der Erfindung betrifft ein Computerprogrammprodukt, aufweisend Befehle, mit welchen ein Abstand des tragbaren Kommunikationsendgeräts zum Kraftfahrzeug auf Basis von Bildinformationen, die mit einer Kamera des tragbaren Kommunikationsendgeräts aufgenommen werden, bestimmt wird. Insbesondere können mit dem Computerprogrammprodukt diese Informationen, die mit einer Kamera des tragbaren Kommunikationsendgeräts aufgenommen werden, ausgewertet werden.

Die Erfindung umfasst auch die Kombinationen der Merkmale der beschriebenen Ausführungsformen.

Im Folgenden ist ein Ausführungsbeispiel der Erfindung beschrieben. Hierzu zeigt die einzige

Figur ein beispielhaftes Szenario eines Rangiervorgangs eines Kraftfahrzeugs.

Bei dem im Folgenden erläuterten Ausführungsbeispiel handelt es sich um eine bevorzugte Ausführungsform der Erfindung.

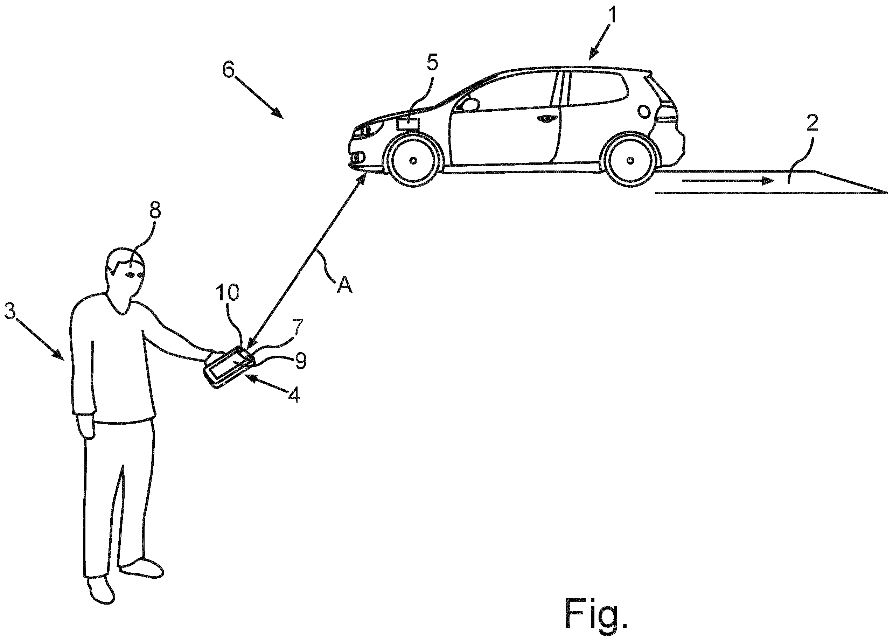

In der einzigen Fig. ist ein Kraftfahrzeug 1 gezeigt. Das Kraftfahrzeug 1 kann beispielsweise ein Personenkraftwagen sein. Es kann jedoch auch ein Lastkraftwagen sein. Das Kraftfahrzeug 1 soll einen Rangiervorgang durchführen. Im Ausführungsbeispiel soll dieser automatische Rangiervorgang ein Parkvorgang sein. Das Kraftfahrzeug 1 soll bei diesem Rangiervorgang in eine hier beispielhaft vorgesehene Parkzone 2 eingeparkt werden. Ein Nutzer 3 des Kraftfahrzeugs 1 hat das Kraftfahrzeug 1 vor dem Beginn des Rangiervorgangs verlassen. Der Rangiervorgang des Kraftfahrzeugs 1 wird durch den Nutzer 3 mittels eines tragbaren Kommunikationsendgeräts 4 von außerhalb des Kraftfahrzeugs 1 gesteuert. Das Kraftfahrzeug 1 weist zumindest eine Steuereinheit 5 auf. Das tragbare Kommunikationsendgerät 4, welches beispielsweise ein Mobilfunkgerät, wie ein Smartphone oder ein Tablet, sein kann, ist zur drahtlosen Kommunikation mit dem Kraftfahrzeug 1, insbesondere der Steuereinheit 5 ausgebildet. Durch die Ausgestaltung in der Fig. ist auch ein Rangierassistenzsystem 6 gebildet. Dieses Rangierassistenzsystem 6 ist zum Durchführen eines Verfahrens, wie es nachfolgend dargelegt wird, ausgebildet. Insbesondere wird dieses Verfahren mit diesem Rangierassistenzsystem 6 durchgeführt.

Der Rangiervorgang kann durch den Nutzer 3 dahingehend gestartet werden, dass er das tragbare Kommunikationsendgerät 4 entsprechend bedient. Es kann in dem Zusammenhang eine spezifische Eingabe in das tragbare Kommunikationsendgerät 4 erfolgen, um den Rangiervorgang des Kraftfahrzeugs 1 zu starten. Aktionen des Kraftfahrzeugs 1, wie beispielsweise ein Lenken und/oder ein Beschleunigen und/oder ein Bremsen und/oder ein Vorwärtsbewegen und/oder ein Rückwärtsbewegen werden durch Eingabe des Nutzers 3 in das tragbare Kommunikationsendgerät 4 initiiert, wobei dazu entsprechende Signale erzeugt werden und an die Steuereinheit 5 übertragen werden.

Während des Rangiervorgangs des Kraftfahrzeugs 1 wird das Kraftfahrzeug 1 mit einer Kamera 7 des tragbaren Kommunikationsendgeräts 4 erfasst. Insbesondere ist die Kamera 7 eine Rückkamera des Kommunikationsendgeräts 4. Vorzugsweise wird die Kamera 7 während des Rangiervorgangs kontinuierlich betrieben.

Der Nutzer 3 kann mit seinem Gesicht 8 auf eine Anzeigeeinheit 9 des tragbaren Kommunikationsendgeräts 4 blicken. Er kann dabei erkennen oder insbesondere dies auch überwachen, ob zumindest eine Komponente des Kraftfahrzeugs 1 fokussiert ist und somit scharf in dem zumindest einen Bild aufgenommen wird. Diese Komponenten ist dann in der aktuell eingestellten Fokusebene der Kamera 7 aufgenommen.

Das tragbare Kommunikationsendgerät 4 weist vorzugsweise auch eine Auswerteeinheit 10 auf.

Während des Rangiervorgangs wird das Kraftfahrzeug 1 zumindest bereichsweise mit der Kamera 7, die hier eine Rückkamera ist und bei Betrachtung der Anzeigeeinheit 9 des tragbaren Kommunikationsendgeräts 4 durch den Nutzer 3 diesem Nutzer 3 abgewandt ist, aufgenommen. Die Kamera 7 erfasst das Kraftfahrzeug 1 zumindest bereichsweise. Abhängig von den aufgenommenen Bildinformationen der Kamera 7 wird ein Abstand A zwischen dem Kraftfahrzeug 1 und dem tragbaren Kommunikationsendgerät 4 bestimmt. Die Bildinformationen werden dazu entsprechend ausgewertet.

Es kann in einer vorteilhaften Ausführung dafür vorgesehen sein, dass Abmessungen von zumindest einer Komponente des Kraftfahrzeugs 1 in dem zumindest einen Bild, welches mit der Kamera 7 aufgenommen wird, bestimmt wird und abhängig von diesen Abmessungen der Abstand A bestimmt wird. Eine diesbezügliche Komponente kann eine Seitenansicht oder eine Frontansicht oder eine Heckansicht des Kraftfahrzeugs 1 sein. Beispielsweise kann eine derartige Komponente ein Kotflügel oder ein Rad oder eine Tür sein. Es kann vorgesehen sein, dass reale Abmessungen von zumindest einer derartigen Komponente des Kraftfahrzeugs 1 abgespeichert sind. Eine derartige reale Abmessung kann beispielsweise in der Steuereinheit 5 abgespeichert sein. Sie kann jedoch zusätzlich oder anstatt dazu in dem tragbaren Kommunikationsendgerät 4 abgespeichert sein. Eine derartige Information kann auch beispielsweise von der Steuereinheit 5 auf das tragbare Kommunikationsendgerät 4 übertragen werden.

In einer vorteilhaften Ausführung ist vorgesehen, dass die aktuelle Fokusebene der Kamera 7 bekannt ist und bei der Bestimmung des Abstands berücksichtigt wird. Beispielsweise kann in dem Zusammenhang ein in dem aufgenommenen Bild scharfer Bereich erkannt werden, der dann im Fokus dieser Kamera liegt und somit in der Fokusebene liegt. Da dieser Abstand A von der Kamera 7 zu diesem Fokus beziehungsweise der Fokusebene bekannt ist, kann dann auch auf den Abstand zur Kamera 7 geschlossen werden.

Insbesondere wird vor dem Bestimmen des Abstands A eine Identifikationsprüfung des Kraftfahrzeugs 1 durchgeführt. Es kann vorgesehen sein, dass dazu in dem zumindest einen aufgenommenen Bild nach zumindest einem charakteristischen Merkmal des Kraftfahrzeugs 1 gesucht wird. Das Kraftfahrzeug 1 kann dann als dasjenige identifiziert werden, welches zur Steuerung mit dem tragbaren Kommunikationsendgerät 4 authentifiziert ist, wenn zumindest ein derartiges charakteristisches Merkmal in dem Bild erkannt wird. Insbesondere kann der Abstand A kontinuierlich bestimmt werden während des Rangiervorgangs.

Auf der Anzeigeeinheit 9 des Kommunikationsendgeräts 4 kann der bestimmte Abstand und/oder eine Rangiertrajektorie des Kraftfahrzeugs 1 und/oder Bedienanweisungen und/oder ein Identifizierungsstatus des Kraftfahrzeugs 1 bei der Identifikationsprüfung angezeigt werden. Insbesondere kann in dem Zusammenhang eine Anzeige als erweiterte Realität in dem Bild erfolgen. Dieses Bild wird auf der Anzeigeeinheit 9 angezeigt. Insbesondere dann, wenn der bestimmte Abstand A einen Abstandsschwellwert überschreitet, wird der Rangiervorgang zumindest unterbrochen.

## Patentansprüche

1. Verfahren zum Durchführen eines Rangiervorgangs eines Kraftfahrzeugs (1), bei welchem das Rangieren des Kraftfahrzeugs (1) durch einen Nutzer (3), der außerhalb des Kraftfahrzeugs (1) im Umgebungsbereich des Kraftfahrzeugs (1) positioniert ist, mittels eines tragbaren Kommunikationsendgeräts (4) durchgeführt wird, und dazu Signale zwischen dem Kommunikationsendgerät (4) und dem Kraftfahrzeug (1) ausgetauscht werden, wobei ein Abstand (A) zwischen dem Kraftfahrzeug (1) und dem tragbaren Kommunikationsendgerät (4) bestimmt wird, wobei während dem Rangiervorgang das Kraftfahrzeug (1) zumindest bereichsweise mit einer Kamera (7) des tragbaren Kommunikationsendgeräts (4) aufgenommen wird, wobei
abhängig von der aufgenommenen Bildinformationen der Abstand (A) zwischen dem Kraftfahrzeug (1) und dem Kommunikationsendgerät (4) bestimmt wird,
**dadurch gekennzeichnet, dass**
auf einer Anzeigeeinheit (9) des Kommunikationsendgeräts (1) der bestimmte Abstand (A) und/oder eine Rangiertrajektorie des Kraftfahrzeugs (1) und/oder Bedienanweisungen als erweiterte Realität in einem Bild angezeigt wird, und vor dem Bestimmen des Abstands (A) eine Identifikationsprüfung des Kraftfahrzeugs (1) durchgeführt wird, wobei dazu in dem zumindest einen aufgenommenen Bild nach zumindest einem charakteristischen Merkmal des Kraftfahrzeugs (1) gesucht wird, und das Kraftfahrzeug (1) als dasjenige identifiziert wird, welches zur Steuerung mit dem Kommunikationsendgeräts (4) authentifiziert ist, wenn ein charakteristisches Merkmal in dem Bild erkannt wird.

2. Verfahren nach Anspruch 1,
**dadurch gekennzeichnet, dass**
der Rangiervorgang unterbrochen wird, wenn ein Abstand (A) bestimmt wird, der größer einem Abstandsschwellwert ist.

3. Verfahren nach Anspruch 1 oder 2,
**dadurch gekennzeichnet, dass**
Abmessungen von Komponenten des Kraftfahrzeugs (1) in dem zumindest einen Bild bestimmt werden und abhängig von diesen Abmessungen der Abstand (A) bestimmt wird.

4. Verfahren nach Anspruch 3,
**dadurch gekennzeichnet, dass**
reale Abmessungen von zumindest Komponenten des Kraftfahrzeugs (1) abgespeichert sind und abhängig von einem Vergleich von realen Abmessungen zumindest einer Komponente des Kraftfahrzeugs (1) mit den aus dem Bild bestimmten Abmessungen der Abstand (A) bestimmt wird.

5. Verfahren nach Anspruch 3 oder 4,
**dadurch gekennzeichnet, dass**
zumindest eine, insbesondere aktuelle, Fokusebene der Kamera (7), insbesondere bezüglich dem aufgenommenen Bild, bekannt ist und bei der Bestimmung des Abstands (A) berücksichtigt wird.

6. Verfahren nach einem der vorhergehenden Ansprüche,
**dadurch gekennzeichnet, dass**
der Abstand (A) kontinuierlich bestimmt wird und/oder die Kamera (7) des tragbaren Kommunikationsendgeräts (4) während des Rangiervorgangs kontinuierlich betrieben wird.

7. Verfahren nach einem der vorehrgehenden Ansprüche,
**dadurch gekennzeichnet, dass**
zusätzlich auf einer Anzeigeeinheit (9) des Kommunikationsendgeräts (1) ein Identifizierungsstatus des Kraftfahrzeugs (1) als erweiterte Realität in einem Bild angezeigt wird.

8. Verfahren nach einem der vorhergehenden Ansprüche,
**dadurch gekennzeichnet, dass**
dann , wenn der bestimmte Abstand (A) einen Abstandsschwellwerts überschreitet der Rangiervorgang zumindest unterbrochen wird.

9. Rangierassistenzsystem (6) für ein Kraftfahrzeug (1), mit einem Kraftfahrzeug (1) und einem tragbaren Kommunikationsendgerät (4), welches zum drahtlosen Kommunizieren mit dem Kraftfahrzeug (1) ausgebildet ist, so dass ein Rangiervorgang des Kraftfahrzeugs (1) durch einen Nutzer (3) von außerhalb des Kraftfahrzeugs (1) mit dem tragbaren Kommunikationsendgerät (4) steuerbar ist, wobei das Rangierassistenzsystem (6) zum Durchführen eines Verfahrens nach einem der vorhergehenden Ansprüche ausgebildet ist.

## Claims

1. Method for carrying out a manoeuvring process of a motor vehicle (1) in which the manoeuvring of the motor vehicle (1) is carried out by a user (3) positioned outside the motor vehicle (1) in the vicinity of the motor vehicle (1), by means of a portable communication terminal (4), and signals are exchanged between the communication terminal (4) and the motor vehicle (1) for this purpose, wherein a distance (A) between the motor vehicle (1) and the portable communication terminal (4) is determined, wherein the motor vehicle (1) is captured at least partially by a camera (7) of the portable communication terminal (4) during the manoeuvring process, wherein
the distance (A) between the motor vehicle (1) and the communication terminal (4) is determined depending on the captured image information,
**characterized in that**
a display unit (9) of the communication terminal (1) displays the determined distance (A) and/or a manoeuvring trajectory of the motor vehicle (1) and/or operating instructions as augmented reality in an image, and an identification check of the motor vehicle (1) is carried out before the distance (A) is determined, wherein for this purpose the at least one captured image is searched for at least one characteristic feature of the motor vehicle (1), and the motor vehicle (1) is identified as the one authenticated for control by the communication terminal (4) if a characteristic feature is recognized in the image.

2. Method according to Claim 1,
**characterized in that**
the manoeuvring process is interrupted if a distance (A) which is greater than a distance threshold value is determined.

3. Method according to Claim 1 or 2,
**characterized in that**
dimensions of components of the motor vehicle (1) in the at least one image are determined and the distance (A) is determined depending on these dimensions.

4. Method according to Claim 3,
**characterized in that**
real dimensions of at least components of the motor vehicle (1) are stored and, depending on a comparison of real dimensions of at least one component of the motor vehicle (1) with the dimensions determined from the image, the distance (A) is determined.

5. Method according to Claim 3 or 4,
**characterized in that**
at least one, in particular current, focal plane of the camera (7), in particular with respect to the captured image, is known and is taken into account in the determination of the distance (A).

6. Method according to any of the preceding claims,
**characterized in that**
the distance (A) is continuously determined and/or the camera (7) of the portable communication terminal (4) is continuously operated during the manoeuvring process.

7. Method according to any of the preceding claims,
**characterized in that**
a display unit (9) of the communication terminal (1) additionally displays an identification status of the motor vehicle (1) as augmented reality in an image.

8. Method according to any of the preceding claims,
**characterized in that**
if the determined distance (A) exceeds a distance threshold value, the manoeuvring process is at least interrupted.

9. Manoeuvring assistance system (6) for a motor vehicle (1), with a motor vehicle (1) and a portable communication terminal (4) designed for wireless communication with the motor vehicle (1), such that a manoeuvring process of the motor vehicle (1) is controllable by a user (3) from outside the motor vehicle (1) by way of the portable communication terminal (4), wherein the manoeuvring assistance system (6) is designed for carrying out a method according to any of the preceding claims.

## Revendications

1. Procédé pour effectuer un processus de manœuvre d'un véhicule automobile (1), avec lequel la manœuvre du véhicule automobile (1) est effectuée par un utilisateur (3), qui est positionné à l'extérieur du véhicule automobile (1) dans la zone environnante du véhicule automobile (1), au moyen d'un terminal de communication (4) portable, et des signaux sont échangés à cet effet entre le terminal de communication (4) et le véhicule automobile (1), une distance (A) entre le véhicule automobile (1) et le terminal de communication (4) portable étant déterminée, le véhicule automobile (1) étant enregistré au moins par zones par une caméra (7) du terminal de communication (4) portable pendant le processus de manœuvre,
la distance (A) entre le véhicule automobile (1) et le terminal de communication (4) étant déterminée en fonction des informations d'image enregistrées,
**caractérisé en ce que**
sur une unité d'affichage (9) du terminal de communication (1), la distance (A) déterminée et/ou une trajectoire de manœuvre du véhicule automobile (1) et/ou des instructions de commande sont affichées dans une image sous forme de réalité augmentée et, avant la détermination de la distance (A), un contrôle d'identification du véhicule automobile (1) est effectué, au moins un attribut caractéristique du véhicule automobile (1) étant recherché à cet effet dans l'au moins une image enregistrée, et le véhicule automobile (1) étant identifié comme étant celui qui est authentifié pour la commande avec le terminal de communication (4) lorsqu'un attribut caractéristique est reconnu dans l'image.

2. Procédé selon la revendication 1,
**caractérisé en ce que**
le processus de manœuvre est interrompu lorsqu'une distance (A) supérieure à une valeur de seuil de distance est déterminée.

3. Procédé selon la revendication 1 ou 2,
**caractérisé en ce que**
des dimensions de composants du véhicule automobile (1) sont déterminées dans l'au moins une image et la distance (A) est déterminée en fonction de ces dimensions.

4. Procédé selon la revendication 3,
**caractérisé en ce que**
des dimensions réelles d'au moins des composants du véhicule automobile (1) sont mémorisées et la distance (A) est déterminée en fonction d'une comparaison de dimensions réelles d'au moins un composant du véhicule automobile (1) avec les dimensions déterminées à partir de l'image.

5. Procédé selon la revendication 3 ou 4,
**caractérisé en ce que**
au moins un plan focal, notamment actuel, de la caméra (7) est connu, notamment en rapport avec l'image enregistrée, et il est pris en compte lors de la détermination de la distance (A).

6. Procédé selon l'une des revendications précédentes,
**caractérisé en ce que**
la distance (A) est déterminée en continu et/ou la caméra (7) du terminal de communication (4) portable fonctionne en continu pendant le processus de manœuvre.

7. Procédé selon l'une des revendications précédentes,
**caractérisé en ce que**
un état d'identification du véhicule automobile (1) est affiché en plus sur une unité d'affichage (9) du terminal de communication (1) sous forme de réalité augmentée dans une image.

8. Procédé selon l'une des revendications précédentes,
**caractérisé en ce que**
lorsque la distance déterminée (A) dépasse une valeur seuil de distance, le processus de manœuvre est au moins interrompu.

9. Système d'assistance aux manœuvres (6) pour un véhicule automobile (1), comprenant un véhicule automobile (1) et un terminal de communication (4) portable, lequel est configuré pour communiquer sans fil avec le véhicule automobile (1), de sorte qu'un processus de manœuvre du véhicule automobile (1) peut être commandé par un utilisateur (3) depuis l'extérieur du véhicule automobile (1) avec le terminal de communication (4) portable, le système d'assistance aux manœuvres (6) étant configuré pour mettre en œuvre un procédé selon l'une des revendications précédentes.
